# EUROPEAN PATENT SPECIFICATION

(11) **EP 2 733 772 B1**
(45) Date of publication and mention of the grant of the patent: **08.06.2016**
(21) Application number: 13164253.0
(22) Date of filing: 18.04.2013
(51) Int. Cl.: H01M 2/14, H01M 2/16, H01M 10/052

(54) **Separator for rechargeable lithium battery, method of preparing the same and rechargeable lithium battery including the same**
Separator für wiederaufladbare Lithiumbatterie, Verfahren zur Herstellung desselben sowie wiederaufladbare Lithiumbatterie damit
Séparateur pour batterie au lithium rechargeable, procédé de préparation correspondant et batterie au lithium rechargeable comprenant celui-ci

(30) Priority: 20.11.2012 US 201261728524 P; 13.03.2013 US 201313800335
(43) Date of publication of application: 21.05.2014
(73) Proprietor: Samsung SDI Co., Ltd., Giheung-gu Yongin-si, Gyeonggi-do 17084 (KR)
(72) Inventor: Chan-Seok, Kim, Yongin-si, Gyeonggi-do (KR)
(74) Representative: Taor, Simon Edward William

(56) References cited:
- EP-A2- 0 913 875
- DE-A1- 10 142 622
- US-A1- 2001 000 485

## Description

This disclosure relates to a separator for a rechargeable lithium battery, a method of preparing the same, and a rechargeable lithium battery including the same.

A rechargeable lithium battery includes a separator made of a porous insulating film and interposed between positive and negative electrodes, and the pores of the film are impregnated by an electrolyte solution including a lithium salt dissolved therein. The rechargeable lithium battery has excellent high-capacity and high energy density characteristics.

However, when the positive and negative electrodes therein are repetitively contracted and expanded during the charge and discharge cycles and thus, react with a separator or an electrolyte solution, the non-aqueous rechargeable lithium battery may be easily deteriorated, have internal and external short circuits, and be rapidly increased. When the battery rapidly becomes hot as aforementioned, the separator is melted and rapidly contracted or destroyed and thus, short-circuited again.

In order to prevent this problem, a porous film made of polyolefin has been used as a separator. The polyolefin film is partly fused and thus, closes pores and cuts off a current, when a battery is heated up due to overcharge, external or internal short circuit, and the like. Accordingly, the polyolefin film has excellent shutdown characteristics. An attempt has been made to improve safety of the rechargeable lithium battery by improving heat resistance of a material of a separator, an electrode and the like, and in particular, to secure thermal safety even when a separator therein is sharply contracted or destroyed.

EPo913875 discloses a modified cell that comprises a layer of perforated fabric placed between the anode and the cathode along with a suitable electrolyte absorbent separator material. Electrodes are assembled into a cell using typical techniques with a spirally-wound configuration being preferred.

US2001000485 discloses separators for electrochemical cells which comprise (i) two microporous pseudo-boehmite layers and (ii) a protective coating layer comprising a polymer interposed between the microporous pseudo-boehmite layers.

DE10142622 discloses a separator comprising a flat, flexible substrate provided with a plurality of orifices and a coating both on and in said substrate.

One embodiment of the present invention provides a separator for a rechargeable lithium battery having improved safety due to excellent heat resistance.

Another embodiment of the present invention provides a method of preparing the separator for a rechargeable lithium battery.

Yet another embodiment of the present invention provides a rechargeable lithium battery including the separator for a rechargeable lithium battery.

According to an embodiment, provided is a separator for a rechargeable lithium battery that includes a porous substrate; a patterned woven fabric layer disposed on at least one side of the porous substrate; and a polymer coating layer forming a planarization layer disposed on at least one side of the woven fabric layer. The patterned woven fabric layer is a fabric support layer comprising a plurality of connected strands of fiber and a plurality of open portions, wherein at least some of the open portions in the fabric support layer form a repeating pattern.

The patterned woven fabric layer may have a reticular or island structure.

The patterned woven fabric layer may be applied at 1% to 50% based on the entire area of one side of the porous substrate.

The patterned woven fabric layer may include a polymer, glass, wood, or a combination thereof.

The polymer coating layer may include acrylate, urethane, melamine, epoxy, unsaturated ester, resorcinol, polyamide, vinyl, styrene, or a combination thereof.

The polymer coating layer may further include a binder polymer.

The binder polymer may be included in an amount of 10 wt% to 70 wt% based on the total amount of the polymer coating layer.

The separator for a rechargeable lithium battery may further include a ceramic layer disposed on at least one side of the woven fabric layer.

The ceramic layer may be positioned in the same layer with the patterned woven fabric layer.

The ceramic layer may have the substantially same thickness with the patterned woven fabric layer.

The ceramic layer may be porous, and the ceramic layer may have a porosity of 10 to 50%.

The ceramic layer may include one selected from the group consisting of metal oxide, metal nitride, metal phosphide, and a combination thereof including one selected from the group consisting of Al, Ti, Cr, Zr, Ca, Si, and a combination thereof.

According to another embodiment, a method of preparing a separator for a rechargeable lithium battery that includes preparing a porous substrate; forming a patterned woven fabric layer on one side of the porous substrate; and forming a polymer coating layer as a planarization layer on one side of the patterned woven fabric layer.

The patterned woven fabric layer may be formed while joining one side of the porous substrate after the woven fabric layer is patterned.

The method may further include forming a ceramic layer after the patterned woven fabric layer may be formed.

According to yet another embodiment, provided is a rechargeable lithium battery that includes a positive electrode including a positive active material; a negative electrode including a negative active material, the separator interposed between the positive electrode and negative electrode; and an electrolyte solution.

According to an embodiment, provided is a separator for a rechargeable lithium battery that comprises a porous substrate; a fabric support layer disposed on at least one side of the porous substrate, the fabric support layer comprising a plurality of connected strands of fiber, and the fabric support layer comprising a plurality of open portions, wherein at least some of the open portions in the fabric support layer form a repeating pattern; and a polymer coating layer forming a planarization layer disposed on at least one side of the fabric support layer.

The fabric support layer may be woven, non-woven or knitted.

The pattern may be any one of a reticular pattern, an island pattern, a web pattern, a rhombus pattern, a circle pattern, a pentagon pattern, or a triangle pattern.

The open portions may form from 50% to 99% of the entire area of one side of the porous substrate, optionally wherein the open portions form from 70% to 95% of the entire area of one side of the porous substrate.

The strands of fiber may comprise a polymer, glass, cellulose, or a combination thereof.

The porous substrate may comprise a polyolefin resin, wherein optionally the polyolefin resin includes polyethylene, polypropylene, polyvinylidene fluoride, a copolymer thereof, or a combination thereof.

The polymer coating layer may include acrylate, urethane, melamine, epoxy, unsaturated ester, resorcinol, polyamide, vinyl, styrene, or a combination thereof.

The polymer coating layer may further include a binder polymer, optionally wherein the binder polymer is included in an amount of 10 wt% to 70 wt% based on the total amount of the polymer coating layer.

The separator may further include a ceramic layer disposed on at least one side of the fabric support layer.

The ceramic layer may at least partially fill the open portions of the fabric support layer, optionally wherein the ceramic layer has substantially a same thickness as the fabric support layer.

The ceramic layer may be porous, optionally wherein the ceramic layer has a porosity of 10 to 50%.

The ceramic layer may include one selected from the group consisting of metal oxide, metal nitride, metal phosphide, and a combination thereof including one selected from the group consisting of Al, Ti, Cr, Zr, Ca, Si, and a combination thereof.

According to another embodiment, provided is a rechargeable lithium battery that comprises a positive electrode including a positive active material; a negative electrode including a negative active material, a separator according to any one of claims 1 to 12 interposed between the positive electrode and the negative electrode; and an electrolyte solution.

According to yet another embodiment, a method of preparing a separator for a rechargeable lithium battery that comprises preparing a porous substrate; forming a fabric support layer on at least one side of the porous substrate, the fabric support layer comprising a plurality of connected strands of fiber, the fabric support layer comprising a plurality of open portions, wherein at least some of the open portions in the fabric support layer form a repeating pattern; and forming a polymer coating layer as a planarization layer on at least one side of the fabric support layer.

The method may further comprise forming a ceramic layer on at least one side of the fabric support layer.

A separator having excellent heat resistance may be provided, and thus a rechargeable lithium battery having improved thermal safety may be realized.
FIG. 1 is a cross-sectional view of a separator for a rechargeable lithium battery according to one embodiment;
FIG. 2 is a cross-sectional view of a separator for a rechargeable lithium battery not representing an embodiment of the invention
FIG. 3 is a cross-sectional view of a separator for a rechargeable lithium battery according to yet another embodiment;
FIG. 4 is a cross-sectional view of a separator for a rechargeable lithium battery according to still another embodiment;
FIG. 5 is a cross-sectional view of a separator for a rechargeable lithium battery according to further another embodiment;
FIG. 6 is an exploded perspective view showing a structure of a separator for a rechargeable lithium battery according to one embodiment; and
FIG. 7 is a schematic view showing a rechargeable lithium battery according to one embodiment.

Exemplary embodiments will hereinafter be described in detail. However, these embodiments are exemplary, and this disclosure is not limited thereto.

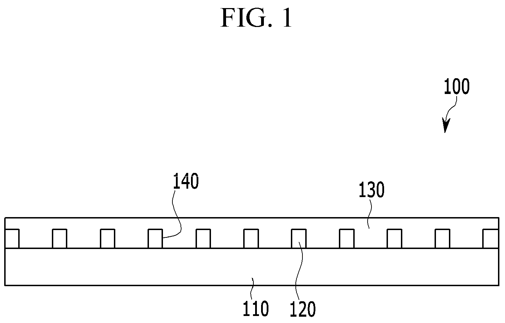

Hereinafter, referring to FIG. 1, a separator for a rechargeable lithium battery according to one embodiment is described.

FIG. 1 is a cross-sectional view of a separator for a rechargeable lithium battery according to one embodiment.

Referring to FIG. 1, the separator for a rechargeable lithium battery 100 according to one embodiment includes a porous substrate 110; a patterned woven fabric layer 120 disposed on at least one side of the porous substrate 110; and a polymer coating layer 130 disposed on at least one side of the woven fabric layer 120. The "patterned woven fabric layer" is a fabric support layer disposed on one side of the porous substrate 110, the fabric support layer comprising a plurality of connected strands of fiber and a plurality of open portions. At least some of the open portions in the fabric support layer form a repeating pattern.

The porous substrate 110 includes a plurality of pores through which an electrolyte solution may move back and forth between positive and negative electrodes. The porous substrate 110 may include a polyolefin resin. The polyolefin resin may include polyethylene, polypropylene, polyvinylidene fluoride, a copolymer thereof, or a combination thereof, but is not limited thereto.

The porous substrate 110 may be a single layer or a multilayer of more than two layers. The porous substrate 110 may include, for example, a mixed multilayer such as a polyethylene/polypropylene double layered separator, a
polyethylene/polypropylene/polyethylene triple layered separator, a polypropylene/polyethylene/polypropylene triple layered separator, and the like.

The fabric support layer layer 120 may be positioned on one surface of the porous substrate 110. However, the present invention is not limited thereto, but the fabric support layer 120 may be positioned on both surfaces of the porous substrate 110 (not shown). When the fabric support layer 120 is formed on both surfaces of the porous substrate 110, the both surfaces may have the same or different pattern.

In this embodiment, the fabric support layer 120 is formed by patterning a woven fabric layer with a predetermined repetitive pattern having, for example, a reticular or island structure.

When the fabric support layer 120 has, for example, a reticular structure, a pattern is formed by crossing a plurality of first parts in one direction with a plurality of second parts in another direction. Herein, the first and second parts may form empty pores 140 where the first and second parts are not crossed each other.

When the fabric support layer 120 has, for example, an island structure, a plurality of patterns separated one another may be formed. The patterns may include, for example, a web, a circle, a polygon, or a combination thereof but is not limited thereto. Herein, a plenty of the empty pores 140 are formed where the patterns are not formed.

The fabric support layer 120 may prevent the porous substrate 110 from being shrunk by heat when the separator 100 is exposed to a high temperature. In other words, the fabric support layer 120 may play a role of a kind of a fiber support layer.

Hence, in the above mentioned embodiment, the separator comprises a porous substrate 110 and a fabric support layer 120 disposed on at least one side of the porous substrate. The fabric support layer 1209 comprises a plurality of connected strands of fibre and a plurality of open portions. At least some of the open portions in the fabric support layer form a repeating pattern. The separator also comprises a polymer coating layer 130 disposed on at least one side of the fabric support layer 120.

The fabric support layer 120 may include a woven fabric. A woven fabric is different from a non-woven fabric fabricated by thermally compressing a resin. A woven fabric is made by weaving a plurality of treads with another plenty of tread perpendicularly crossing with them. Accordingly, the woven fabric may have excellent strength and durability compared with a non-woven fabric and thus, may be usefully applied as a material for a fiber support layer. In addition, the woven fabric has excellent formability and may well form a desired pattern.

The woven fabric may include, for example a polymer, glass, woodcellulose, or a combination thereof, but embodiments of the invention are not limited thereto. The polymer may include, for example polyester, polyimide, polyamide, or a combination thereof but embodiments of the invention are not limited thereto.

The fabric support layer 120 can be formed in an area of about 1% to about 50% and specifically, about 5% to about 30% based on the entire area of one surface of the porous substrate 110. As aforementioned, the empty pores 140 are formed where the patterned woven fabric layer 120 is not formed on one surface of the porous substrate 110. Accordingly, when the patterned woven fabric layer 120 is formed within the area range based on the entire area of the porous substrate 110, appropriate porosity may be secured. The patterned woven fabric layer 120 may efficiently prevent thermal shrinkage of the separator 100. Therefore, thermal safety of a battery may be improved. In other words, the open portions of the fabric support layer 120 can form from 50% to 99% of the entire area of one side of the porous substrate 110. In some embodiments, the open portions can form from 70% to 95% of the entire area of one side of the porous substrate 110.

The fabric support layer 120 may have a thickness ranging from about 1µm to about 10,000µm and specifically, about 10µm to about 5,000µm. When the fabric support layer 120 has a thickness within the range, the separator 100 may have no thermal shrinkage and thus, improve thermal safety of a battery.

In this embodiment, the polymer coating layer 130 is formed on one surface of the fabric support layer 120. In this embodiment, the polymer coating layer 130 covers the whole surface of the fabric support layer 120 and the porous substrate 110 and thus, planarizes one surface of the fabric support layer 120. Herein, the polymer coating layer 130 planarizes the surface of the separator 100 facing an electrode plate as well as adheres the separator 100 to a positive or negative electrode.

The polymer coating layer 130 may be about 1µm to about 500µm thick. When the polymer coating layer 130 has a thickness within the range, the separator 100 may maintain appropriate adherence to the electrode plate and improve thermal safety of a battery.

The polymer coating layer 130 may include an adhesive. The polymer coating layer 130 may include, for example acrylate, urethane, melamine, epoxy, unsaturated ester, resorcinol, polyamide, vinyl, styrene, or a combination thereof, but is not limited thereto.

The polymer coating layer 130 plays a role of facing the positive or negative electrode and adhering the separator 100 to the positive or negative electrode.

The polymer coating layer 130 may further include a binder polymer.

The binder polymer may include a polymer polymerized from at least one monomer selected from the group consisting of ethylenic unsaturated carboxylic acid alkyl ester, a nitrile-based compound, a conjugated diene-based compound, ethylenic unsaturated carboxylic acid and a salt thereof, an aromatic vinyl compound, fluoroalkyl vinylether, vinylpyridine, a non-conjugated diene-based compound, α-olefin, an ethylenic unsaturated amide compound, and a sulfonic acid-based unsaturated compound, but is not limited thereto.

The binder polymer may be included in an amount of about 10 wt% to about 70 wt% based on the total amount of the polymer coating layer 130. When the binder is included within the range, the separator may maintain appropriate adherence to the positive or negative electrode and improve thermal safety of a battery.

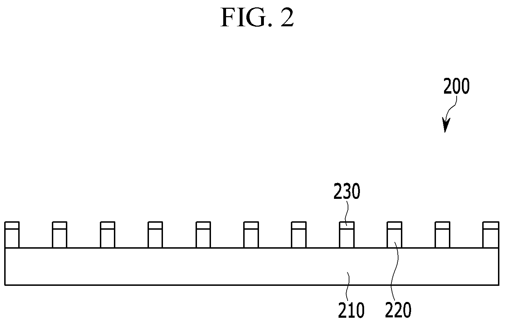

Hereinafter, structures of separators for a rechargeable lithium battery according to another embodiment are described referring to FIGS. 2 to 5. However, the same illustration as aforementioned will be omitted.

FIGS. 2 to 5 are cross-sectional views showing structures of separators for a rechargeable lithium battery according to another embodiment.

Referring to FIG. 2, an embodiment which is not covered by the invention, a separator for a rechargeable lithium battery 200 according to the present embodiment includes a porous substrate 210, a patterned woven fabric layer (fabric support layer) 220, and a polymer coating layer 230 like the aforementioned embodiment.

However, the separator for a rechargeable lithium battery according to the present embodiment includes the polymer coating layer 230 positioned only on the top of the fabric support layer 220 but not covering the porous substrate 210 exposed among the fabric support layer 220 unlike the aforementioned embodiment.

Herein, the separator has higher porosity than the one according to the aforementioned embodiment and may be efficiently prevented from thermal shrinkage.

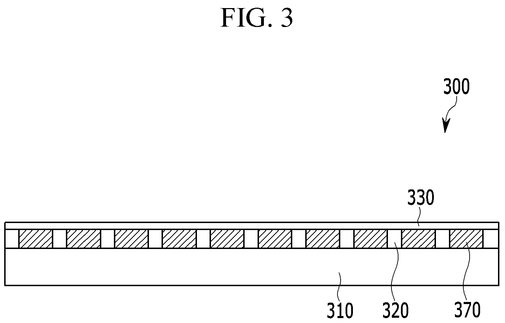

Referring to FIG. 3, the separator for a rechargeable lithium battery 300 according to the present embodiment includes a porous substrate 310, a patterned woven fabric layer (fabric support layer) 320, and a polymer coating layer 330 like the aforementioned embodiment.

However, the separator for a rechargeable lithium battery according to the present embodiment may further include a ceramic layer 370 unlike the aforementioned embodiment.

The ceramic layer 370 may be positioned in the same layer with the patterned woven fabric layer 320, and may be formed on a part where the patterned woven fabric layer 320 is not applied on one side of the porous substrate 310.

The ceramic layer may have the substantially same thickness with the patterned woven fabric layer. When the ceramic layer has the thickness, the separator may be prepared in a simpler process.

The ceramic layer 370 may play a role of filling empty pore of the separator 300 and also, reinforce heat resistance of the separator 300 and apply thermal stability to a battery.

The ceramic layer 370 may be porous. The ceramic layer 370 may have a porosity of 10 to 50% based on the total volume of the ceramic layer 370. When the ceramic layer 370 has porosity within the range, ions may more smoothly move and improve battery performance.

The ceramic layer 370 may include a ceramic material, for example one selected from the group consisting of metal oxide, metal nitride, metal phosphide, and a combination thereof, but is not limited thereto. The metal may include, for example one selected from the group consisting of Al, Ti, Cr, Zr, Ca, Si, and a combination thereof.

The polymer coating layer 330 is formed on one surface of the ceramic layer 370 and planarizes it like the aforementioned embodiment. The polymer coating layer 330 may play a role of adhering an electrode plate to the separator 300 and planarizing the surface of the separator 300.

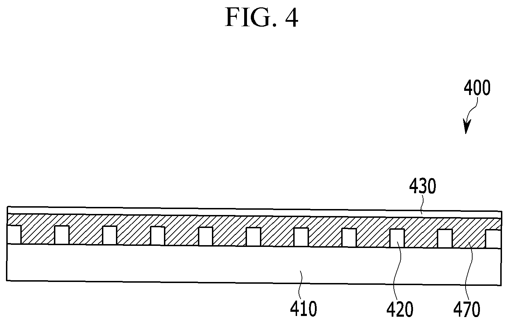

Referring to FIG. 4, a separator 400 for a rechargeable lithium battery according to the present embodiment includes a porous substrate 410, a patterned woven fabric layer (fabric support layer) 420, a polymer coating layer 430, and a ceramic layer 470.

However, the separator 400 for a rechargeable lithium battery includes the ceramic layer 470 substantially thicker than the patterned woven fabric layer (fabric support layer) 420. When the ceramic layer 470 has the thickness, thermal stability of the separator may be improved.

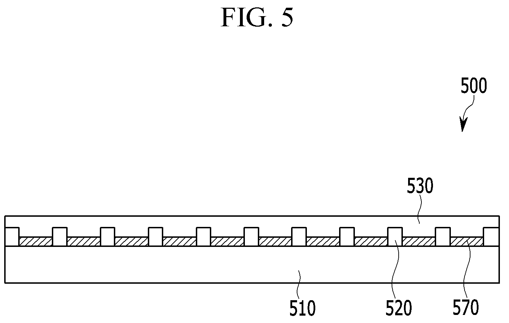

Referring to FIG. 5, a separator 500 for a rechargeable lithium battery according to the present embodiment includes a porous substrate 510, a patterned woven fabric layer (fabric support layer) 520, a polymer coating layer 530, and a ceramic layer 570 like the aforementioned embodiment.

However, the separator 500 for a rechargeable lithium battery includes the ceramic layer 570 substantially thinner than the patterned woven fabric layer (fabric support layer) 520. When the separator 500 has the thickness, the separator 500 may have better adherence to the electrode plate.

Hereinafter, a method of preparing a separator for a rechargeable lithium battery is described.

A method of preparing a separator according to one embodiment includes preparing a porous substrate; forming a fabric support layer on one side of the porous substrate; and forming a polymer coating layer on one side of the patterned woven fabric layer.

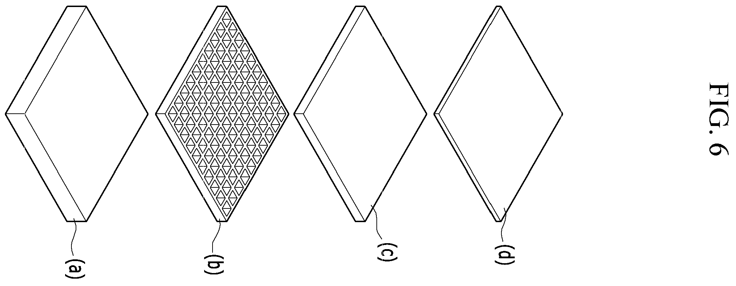

The method of preparing a separator according to another embodiment may further include forming a ceramic layer after forming the fabric support layer. Hereinafter, referring to FIG. 6, the method is described.

Referring to FIG. 6, a method of preparing a separator according to the present embodiment includes preparing a porous substrate (a); forming a fabric support layer on one side of the porous substrate (b); forming a ceramic layer on one side of the patterned woven fabric layer (c); and forming a polymer coating layer on one side of the patterned woven fabric layer (d).

First of all, a porous substrate is prepared (a).

The porous substrate may include a polyolefin resin as aforementioned.

Next, a patterned woven fabric layer is formed on at least one surface of the porous substrate (b).

The fabric support layer may be first patterned and then, contact one side of the porous substrate. In other words, the fabric support layer is separately patterned from the porous substrate and then, formed on one surface of the porous substrate.

The fabric support layer may be directly sprayed on one surface of the porous substrate.

The fabric support layer may be woven. The pattern may be formed by compressing a predetermined pattern.

The fabric support layer may have a reticular or island structure. fabric support layer may be formed in an area ranging from about 1% to about 50% and specifically, about 5% to about 30% based on the entire area of one surface of the porous substrate. On the other hand, an empty pore is formed where the fabric support layer layer is not formed on one surface of the porous substrate.

Next, a ceramic layer is formed on one surface of the fabric support layer (c).

The ceramic layer may be formed through a solution process, for example, spincoating, slitcoating, screen-printing, Inkjet, ODF (one drop filling), or a combination thereof but is not limited thereto.

The ceramic layer may be formed on the same surface of the fabric support layer.

The ceramic layer may be formed where the fabric support layer is not formed on the one surface of the porous substrate. The ceramic layer may substantially have the same thickness as the patterned woven fabric layer.

Then, a polymer coating layer is formed on one surface of the ceramic layer (d).

The polymer coating layer may be formed through the same solution process as the ceramic layer.

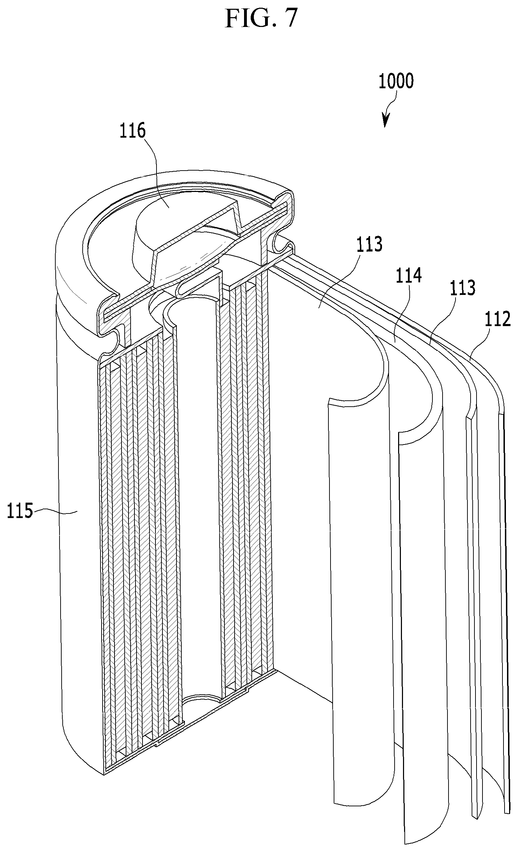

Hereinafter, a rechargeable lithium battery including the separator is illustrated referring to FIG. 7.

FIG. 7 is a schematic view showing a rechargeable lithium battery according to one embodiment. FIG. 7 shows a cylindrical rechargeable lithium battery, but the present invention is not limited thereto.

Referring to FIG. 7, the rechargeable lithium battery 1000 according to one embodiment includes an electrode assembly including a positive electrode 114, a negative electrode 112 facing the positive electrode 114, a separator 113 interposed between the positive electrode 114 and negative electrode 112, an electrolyte solution (not shown) impregnated in the negative electrode 112, the positive electrode 114, and the separator 113, a battery case 115 including the electrode assembly, and a sealing member 116 sealing the battery case 115.

The negative electrode 112 includes a current collector and a negative active material layer formed on the current collector.

The current collector may be a copper foil, a nickel foil, a stainless steel foil, a titanium foil, a nickel foam, a copper foam, a polymer substrate coated with a conductive metal, or a combination thereof, but is not limited thereto.

The negative active material layer includes a negative active material, a binder, and optionally a conductive material.

The negative active material includes a material that reversibly intercalates/deintercalates lithium ions, a lithium metal, a lithium metal alloy, a material being capable of doping lithium, or a transition metal oxide.

The material that reversibly intercalates/deintercalates lithium ions includes carbon materials. The carbon material may be any generally-used carbon-based negative active material in a lithium ion secondary battery. Examples of the carbon material include crystalline carbon, amorphous carbon, and a combination thereof. The crystalline carbon may be non-shaped, or sheet, flake, spherical, or fiber shaped natural graphite or artificial graphite. The amorphous carbon may be a soft carbon (carbon obtained by sintering at a low temperature), a hard carbon (carbon obtained by sintering at a high temperature), mesophase pitch carbonized product, fired coke, and the like.

The lithium metal alloy may include lithium and a metal selected from the group consisting of Na, K, Rb, Cs, Fr, Be, Mg, Ca, Sr, Si, Sb, Pb, In, Zn, Ba, Ra, Ge, Al, and Sn.

Examples of the material being capable of doping and dedoping lithium include Si, SiOₓ (o < x < 2), a Si-Y alloy (wherein Y is an element selected from the group consisting of an alkali metal, an alkaline-earth metal, Group 13 to 16 elements, a transition element, a rare earth element, and a combination thereof, and not Si), Sn, SnO₂, Sn-Y (wherein Y is an element selected from the group consisting of an alkali metal, an alkaline-earth metal, Group 13 to 16 elements, a transition element, a rare earth element, and a combination thereof, and is not Sn), and the like. At least one of them may be mixed with SiO₂. The element Y may be selected from the group consisting of Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ti, Ge, P, As, Sb, Bi, S, Se, Te, Po, and a combination thereof.

The transition metal oxide may include vanadium oxide, lithium vanadium oxide, and the like.

The binder improves binding properties of the negative active material particles to each other and to a current collector, and may include polyvinylalcohol, carboxylmethylcellulose, hydroxypropylcellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, a styrene-butadiene rubber, an acrylated styrene-butadiene rubber, an epoxy resin, nylon, and the like, but is not limited thereto.

The conductive material improves electrical conductivity of a negative electrode. Any electrically conductive material can be used as a conductive agent unless it causes a chemical change. Examples of the conductive material include a carbon-based material such as natural graphite, artificial graphite, carbon black, acetylene black, ketjen black, a carbon fiber, and the like; a metal-based material of a metal powder or a metal fiber including copper, nickel, aluminum, silver, and the like; a conductive polymer such as a polyphenylene; or a mixture thereof.

The negative electrode may be fabricated by a method including mixing an active material, a conductive material, and a binder to prepare an active material composition, and coating the composition on a current collector.

The positive electrode 114 includes a current collector and a positive active material layer disposed on the current collector. The positive active material layer includes a positive active material, a binder, and optionally a conductive material.

The current collector may be Al (aluminum), but is not limited thereto.

The positive active material includes compounds (lithiated intercalation compounds) that reversibly intercalate and deintercalate lithium ions. Specifically, the positive active material may include a composite oxide including cobalt, manganese, nickel or combination thereof, as well as lithium. Specific examples may be one of compounds represented by the following chemical formulae:
LiₐA₁-_{b}B_{b}D₂ (wherein, in the above formula, 0.90 ≤ a ≤ 1.8 and 0 ≤ b ≤ 0.5); LiₐE₁-_{b}B_{b}O₂-_{c}D_{c} (wherein, in the above formula, 0.90 ≤ a ≤ 1.8, 0 ≤ b ≤ 0.5, 0 ≤ c ≤ 0.05); LiE₂-_{b}B_{b}O₄-_{c}D_{c} (wherein, in the above formula, 0 ≤ b ≤ 0.5, 0 ≤ c ≤ 0.05); LiₐNi_{1-b-c}Co_{b}B_{c}D_{α} (wherein, in the above formula, 0.90 ≤ a ≤ 1.8, 0 ≤ b ≤ 0.5, 0 ≤ c ≤ 0.05, 0 < α ≤ 2); LiₐNi_{1-b-c}Co_{b}B_{c}O₂-_{α}F_{α} (wherein, in the above formula, 0.90 ≤ a ≤ 1.8, 0 ≤ b ≤ 0.5, 0 ≤ c ≤ 0.05, 0 < α < 2); LiₐNi₁-_{b}-_{c}Co_{b}B_{c}O₂-_{α}F₂ (wherein, in the above formula, 0.90 ≤ a ≤ 1.8, 0 ≤ b ≤ 0.5, 0 ≤ c ≤ 0,05, 0 < α < 2); LiₐNi₁-_{b}-_{c}Mn_{b}B_{c}D_{α} (wherein, in the above formula, 0.90 ≤ a ≤ 1.8, 0 ≤ b ≤ 0.5, 0 ≤ c ≤ 0.05, 0 < α ≤ 2); LiₐNi_{1-b-c}Mn_{b}B_{c}O₂-_{α}F_{α} (wherein, in the above formula, 0.90 ≤ a ≤ 1.8, o ≤ b ≤ 0.5, 0 ≤ c ≤ 0.05, 0 < α < 2); LiₐNi_{1-b-c}Mn_{b}B_{c}O₂-_{α}F₂ (wherein, in the above formula, 0.90 ≤ a ≤ 1.8, 0 ≤ b ≤ 0.5, 0 ≤ c ≤ 0.05, 0 < α < 2); LiₐNi_{b}E_{c}G_{d}O₂ (wherein, in the above formula, 0.90 ≤ a ≤ 1.8, 0 ≤ b ≤ 0.9, 0 ≤ c ≤ 0.5, 0.001 ≤ d ≤ 0.1); LiₐNi_{b}Co_{c}Mn_{d}GₑO₂ (wherein, in the above formula, 0.90 ≤ a ≤ 1.8, 0 ≤ b ≤ 0.9, 0 ≤ c ≤ 0.5, 0 ≤ d ≤0.5, 0.001 ≤ e ≤ 0.1); LiₐNiG_{b}O₂ (wherein, in the above formula, 0.90 ≤ a ≤ 1.8, 0.001 ≤ b ≤ 0.1); LiₐCoG_{b}O₂ (wherein, in the above formula, 0.90 ≤ a ≤ 1.8, 0.001 ≤ b ≤ 0.1); LiₐMnG_{b}O₂ (wherein, in the above formula, 0.90 ≤ a ≤ 1.8, 0.001 ≤ b ≤ 0.1); LiₐMn₂G_{b}O₄ (wherein, in the above formula, 0.90 ≤ a ≤ 1.8, 0.001 ≤ b ≤ 0.1); QO₂; QS₂; LiQS₂; V₂O₅; LiV₂O₅; LiIO₂; LiNiVO₄; Li(_{3-f})J₂(PO₄)₃ (0 ≤ f ≤ 2); Li_{(3-f)}Fe₂(PO₄)₃ 0 ≤ f ≤ 2); and LiFePO₄.

In the above chemical formulae, A is Ni, Co, Mn, or a combination thereof; B is Al, Ni, Co, Mn, Cr, Fe, Mg, Sr, V, a rare earth element, or a combination thereof; D is O, F, S, P,, or a combination thereof; E is Co, Mn, or a combination thereof; F is F, S, P, or a combination thereof; G is Al, Cr, Mn, Fe, Mg, La, Ce, Sr, V, or a combination thereof; Q is Ti, Mo, Mn, or a combination thereof; I is Cr, V, Fe, Sc, Y, or a combination thereof; and J is V, Cr, Mn, Co, Ni, Cu, or a combination thereof.

The compounds may have a coating layer on the surface, or can be mixed with compounds having a coating layer. The coating layer may include at least one coating element compound selected from the group consisting of an oxide of a coating element, a hydroxide of a coating element, an oxyhydroxide of a coating element, an oxycarbonate of a coating element, and a hydroxyl carbonate of a coating element. The compounds for a coating layer can be amorphous or crystalline. The coating element for a coating layer may include Mg, Al, Co, K, Na, Ca, Si, Ti, V, Sn, Ge, Ga, B, As, Zr, or a mixture thereof. The coating layer can be formed in a method having no negative influence on properties of a positive active material by including these elements in the compound. For example, the method may include any coating method such as spray coating, dipping, and the like, but is not illustrated in more detail, since it is well-known to those who work in the related field.

The binder improves binding properties of the positive active material particles to each other and to a current collector. Examples of the binder may include polyvinylalcohol, carboxylmethylcellulose, hydroxypropylcellulose, diacetylcellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, a styrene-butadiene rubber, an acrylated styrene-butadiene rubber, an epoxy resin, nylon, and the like, but are not limited thereto.

The conductive material improves electrical conductivity of a negative electrode. Any electrically conductive material can be used as a conductive agent unless it causes a chemical change. For example, it may include natural graphite, artificial graphite, carbon black, acetylene black, ketjen black, a carbon fiber, metal powder, metal fiber or the like such as copper, nickel, aluminum, silver or the like, or one or at least one kind mixture of the conductive material such as polyphenylene derivative or the like.

The positive electrode 114 may be manufactured by a method including mixing the active material, a conductive material, and a binder to prepare an active material composition, and coating the composition on a current collector.

Such a method of manufacturing an electrode is well known, and thus is not described in detail in the present specification. The solvent may include N-methylpyrrolidone and the like but is not limited thereto.

The electrolyte solution includes a non-aqueous organic solvent and a lithium salt. The non-aqueous organic solvent serves as a medium for transmitting ions taking part in the electrochemical reaction of a battery. The non-aqueous organic solvent may include a carbonate-based, ester-based, ether-based, ketone-based, alcohol-based, or aprotic solvent.

The carbonate-based solvent may include, for example dimethyl carbonate (DMC), diethyl carbonate (DEC), dipropyl carbonate (DPC), methylpropyl carbonate (MPC), ethylpropyl carbonate (EPC), methylethyl carbonate (MEC), ethylmethyl carbonate (EMC), ethylene carbonate (EC), propylene carbonate (PC), butylene carbonate (BC), and the like.

Particularly, a linear carbonate compound and a cyclic carbonate compound are mixed, an non-aqueous organic solvent having high dielectric constant and low viscosity can be provided. The cyclic carbonate and the linear carbonate are mixed together in a volume ratio ranging from about 1:1 to 1:9.

The ester-based solvent may include, for example methylacetate, ethylacetate, n-propylacetate, dimethylacetate, methylpropinonate, ethylpropinonate, γ-butyrolactone, decanolide, valerolactone, mevalonolactone, caprolactone, and the like. The ether-based solvent may include dibutyl ether, tetraglyme, diglyme, dimethoxyethane, 2-methyltetrahydrofuran, tetrahydrofuran, and the like, and the ketone-based solvent may include cyclohexanone, or the like. The alcohol-based solvent may include ethyl alcohol, isopropyl alcohol, or the like.

The non-aqueous organic solvent may be used singularly or in a mixture. When the organic solvent is used in a mixture, the mixture ratio can be controlled in accordance with a desirable battery performance.

The non-aqueous organic solvent may be further prepared by mixing a carbonate-based solvent with an aromatic hydrocarbon-based solvent. The carbonate-based and the aromatic hydrocarbon-based solvents may be mixed together in a volume ratio ranging from about 1:1 to about 30:1.

The aromatic hydrocarbon-based organic solvent may be represented by the following Chemical Formula 1.

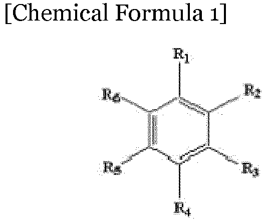

In Chemical Formula 1, R1 to R6 are each independently hydrogen, a halogen, a C1 to C10 alkyl group, a C1 to C10 haloalkyl group, or a combination thereof.

The aromatic hydrocarbon-based organic solvent may include benzene, fluorobenzene, 1,2-difluorobenzene, 1,3-difluorobenzene, 1,4-difluorobenzene, 1,2,3-trifluorobenzene, 1,2,4-trifluorobenzene, chlorobenzene, 1,2-dichlorobenzene, 1,3-dichlorobenzene, 1,4-dichlorobenzene, 1,2,3-trichlorobenzene, 1,2,4-trichlorobenzene, iodobenzene, 1,2-diiodobenzene, 1,3-diiodobenzene, 1,4-diiodobenzene, 1,2,3-triiodobenzene, 1,2,4-triiodobenzene, toluene, fluorotoluene, 1,2-difluorotoluene, 1,3-difluorotoluene, 1,4-difluorotoluene, 1,2,3-trifluorotoluene, 1,2,4-trifluorotoluene, chlorotoluene, 1,2-dichlorotoluene, 1,3-dichlorotoluene, 1,4-dichlorotoluene, 1,2,3-trichlorotoluene, 1,2,4-trichlorotoluene, iodotoluene, 1,2-diiodotoluene, 1,3-diiodotoluene, 1,4-diiodotoluene, 1,2,3-triiodotoluene, 1,2,4-triiodotoluene, xylene, or a combination thereof.

The non-aqueous electrolyte may further include vinylene carbonate, an ethylene carbonate-based compound represented by the following Chemical Formula 2, or a combination thereof to improve cycle-life.

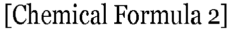

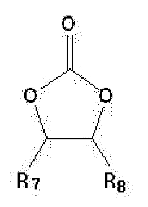

In Chemical Formula 2, R₇ and R₈ are independently hydrogen, a halogen, a cyano group (CN), a nitro group (NO₂), and a C1 to C₅ fluoroalkyl group, provided that at least one of R₇ and R₈ is a halogen, a cyano group (CN), a nitro group (NO₂), and a C1 to C₅ fluoroalkyl group.

Examples of the ethylene carbonate-based compound include difluoro ethylenecarbonate, chloroethylene carbonate, dichloroethylene carbonate, bromoethylene carbonate, dibromoethylene carbonate, nitroethylene carbonate, cyanoethylene carbonate, fluoroethylene carbonate, and the like. The amount of the vinylene carbonate or the ethylene carbonate-based compound used to improve cycle life may be adjusted within an appropriate range.

The lithium salt is dissolved in the non-aqueous organic solvent, supplies a battery with lithium ions, operates a basic operation of the lithium secondary battery, and improves lithium ion transportation between positive and negative electrodes therein. Examples of the lithium salt include LiPF₆, LiBF₄, LiSbF₆, LiAsF₆, LiC₄F₉SO₃, LiClO₄, LiAlO₂, LiAlCl₄, LiN(CₓF₂ₓ₊₁SO₂)(C_{y}F_{2y+1}SO₂) (where x and y are natural numbers), LiCl, LiI, LiB(C₂O₄)₂ (lithium bis(oxalato) borate, LiBOB), or a combination thereof, as a supporting electrolytic salt. The lithium salt may be used in a concentration ranging from 0.1 M to 2.0 M. When the lithium salt is included at the above concentration range, an electrolyte may have excellent performance and lithium ion mobility due to optimal electrolyte conductivity and viscosity.

The separator 113 separates a negative electrode 112 from a positive electrode 114 and provides a transporting passage of lithium ion, which is the same as described above.

The separator 113 is adhered to the negative electrode 112 or the positive electrode 114 through the aforementioned polymer coating layer thereof. Specifically, the separator includes the coating layer including a binder polymer and improved adherence and thus, may be more strongly adhered to an electrode in a pouch-type battery fabricated using a flexible packing material such as a laminating film and the like and prevent a gap generated due to detachment of the electrode therefrom.

The following examples illustrate the present invention in more detail. These examples, however, should not in any sense be interpreted as limiting the scope of the present invention.

### Preparation of Separator

### Example 1

A polyethylene substrate was prepared, and an about 40µm-thick nylon layer was and formed thereon. The nylon layer was patterned to have a reticular structure in which squares were repeated. The nylon layer was formed in an area of about 15% based on the entire area of the polyethylene substrate.

Next, an Al₂O₃-containing solution was coated on the nylon layer to be filled in an empty pore the reticular structure and to form a layer having the same thickness as the nylon layer. The layer formed by the Al₂O₃-containing solution had porosity of about 40%. Then, an acrylate-containing polymer solution was coated to form about 10µm-thick layer on the nylon layer, fabricating a separator.

### Comparative Example 1

A separator was fabricated according to the same method as Example 1 except for forming a flat nylon layer instead of patterning the nylon layer (i.e. forming openings with a repeating pattern).

### Thermal Shrinkage Ratio

The separators according to Example 1 and Comparative Example 1 were respectively heat-treated at 120°C, 150°C, and 180°C in a convention oven and cooled down to room temperature. The separators were evaluated regarding shrinkage ratio related to the ones before the heat treatment.

As a result, the separator according to Comparative Example 1 had a thermal shrinkage ratio ranging from about 5 to about 10% at 120°C and a thermal shrinkage ratio of greater than or equal to about 50% at 150°C. However, the separator of Example 1 had no thermal shrinkage at 120°C and 150°C and a thermal shrinkage ratio of less than about 2% at 160°C.

The separator fabricated by patterning a woven fabric layer according to Example 1 had a lower thermal shrinkage ratio than the one according to Comparative Example 1.

As discussed above, embodiments of the present invention provide a separator for a rechargeable lithium battery, comprising a porous substrate and a fabric support layer disposed on at least one side of the porous substrate. The fabric support layer comprises a plurality of connected strands of fiber and a plurality of open portions. At least some of the open portions in the fabric support layer form a repeating pattern. The separator also comprises a polymer coating layer disposed on at least one side of the fabric support layer. In some embodiments, all the open portions in the fabric support layer form the repeating pattern.

In some embodiments, the fabric support layer may woven, non-woven or knitted. In some embodiments, the pattern is any one of a reticular pattern, an island pattern, a web pattern, a rhombus pattern, a circle pattern, a pentagon pattern, or a triangle pattern.

In some embodiments, the open portions form from 50% to 99% of the entire area of one side of the porous substrate. In other embodiments, the open portions form from 70% to 95% of the entire area of one side of the porous substrate.

In some embodiments, the strands of fiber comprise a polymer, glass, cellulose, or a combination thereof.

In some embodiments, the porous substrate comprises a polyolefin resin. In some embodiments, the polyolefin resin includes polyethylene, polypropylene, polyvinylidene fluoride, a copolymer thereof, or a combination thereof. In some embodiments, the polymer coating layer includes acrylate, urethane, melamine, epoxy, unsaturated ester, resorcinol, polyamide, vinyl, styrene, or a combination thereof. In some embodiments, the polymer coating layer further includes a binder polymer. In some embodiments, the binder polymer is included in an amount of 10 wt% to 70 wt% based on the total amount of the polymer coating layer.

In some embodiments, the separator further includes a ceramic layer disposed on at least one side of the fabric support layer. The ceramic layer may at least partially fill the open portions of the fabric support layer. In some embodiments, the ceramic layer has substantially a same thickness as the fabric support layer. In some embodiments, the ceramic layer is porous, and in some embodiments has a porosity of 10 to 50%. In some embodiments, the ceramic layer includes one selected from the group consisting of metal oxide, metal nitride, metal phosphide, and a combination thereof including one selected from the group consisting of Al, Ti, Cr, Zr, Ca, Si, and a combination thereof.

Embodiments of the invention also provide a rechargeable lithium battery comprising a positive electrode including a positive active material, a negative electrode including a negative active material, a separator as discussed above, and an electrolyte solution.

Furthermore, embodiments of the invention also provide method of preparing a separator for a rechargeable lithium battery, the method comprising preparing a porous substrate, forming a fabric support layer on at least one side of the porous substrate, and forming a polymer coating layer as a planarization layer on at least one side of the fabric support layer. A ceramic layer can be formed on at least one side of the fabric support layer.

While this invention has been described in connection with what is presently considered to be practical exemplary embodiments, it is to be understood that the invention is not limited to the disclosed embodiments, but, on the contrary, is intended to cover various modifications and equivalent arrangements included within the of the appended claims. Therefore, the aforementioned embodiments should be understood to be exemplary but not limiting the present invention in any way.

## Claims

1. A separator (100, 113, 200, 300, 400, 500) for a rechargeable lithium battery, comprising:
a porous substrate (110, 210, 310, 410, 510);
a fabric support layer (120, 220, 320, 420, 520) disposed on at least one side of the porous substrate (110, 210, 310, 410, 510), the fabric support layer (120, 220, 320, 420, 520) comprising a plurality of connected strands of fiber, and the fabric support layer (120, 220, 320, 420, 520) comprising a plurality of open portions, wherein at least some of the open portions in the fabric support layer (120, 220, 320, 420, 520) form a repeating pattern; and
a polymer coating layer (130, 230, 330, 430, 530) forming a planarization layer disposed on at least one side of the fabric support layer (110, 210, 310, 410, 510).

2. A separator according to claim 1, wherein the fabric support layer (120, 220, 320, 420, 520) is woven, non-woven or knitted.

3. A separator according to claim 1 or 2, wherein the pattern is any one of a reticular pattern, an island pattern, a web pattern, a rhombus pattern, a circle pattern, a pentagon pattern, or a triangle pattern.

4. A separator according to any preceding claim, wherein the open portions form from 50% to 99% of the entire area of one side of the porous substrate (110, 210, 310, 410, 510), optionally wherein the open portions form from 70% to 95% of the entire area of one side of the porous substrate (110, 210, 310, 410, 510).

5. A separator according to any preceding claim, wherein the strands of fiber comprise a polymer, glass, cellulose, or a combination thereof.

6. A separator according to any preceding claim, wherein the porous substrate (110, 210, 310, 410, 510) comprises a polyolefin resin, wherein optionally the polyolefin resin includes polyethylene, polypropylene, polyvinylidene fluoride, a copolymer thereof, or a combination thereof.

7. A separator according to any preceding claim, wherein the polymer coating layer (130, 230, 330, 430, 530) includes acrylate, urethane, melamine, epoxy, unsaturated ester, resorcinol, polyamide, vinyl, styrene, or a combination thereof.

8. A separator according to any preceding claim, wherein the polymer coating layer (130, 230, 330, 430, 530) further includes a binder polymer, optionally wherein the binder polymer is included in an amount of 10 wt% to 70 wt% based on the total amount of the polymer coating layer (130, 230, 330, 430, 530).

9. A separator according to any preceding claim, further including a ceramic layer (370, 470, 570) disposed on at least one side of the fabric support layer (120, 220, 320,420,520).

10. A separator according to claim 9, wherein the ceramic layer (370, 470, 570) at least partially fills the open portions of the fabric support layer (120, 220, 320, 420, 520), optionally wherein the ceramic layer (370, 470, 570) has substantially a same thickness as the fabric support layer (120, 220, 320, 420, 520).

11. A separator according to claim 9 or 10, wherein the ceramic layer (370, 470, 570) is porous, optionally wherein the ceramic layer (370, 470, 570) has a porosity of 10 to 50%.

12. A separator according to any one of claims 9 to 11, wherein the ceramic layer (370, 470, 570) includes one selected from the group consisting of metal oxide, metal nitride, metal phosphide, and a combination thereof including one selected from the group consisting of Al, Ti, Cr, Zr, Ca, Si, and a combination thereof.

13. A rechargeable lithium battery (1000) comprising:
a positive electrode (114) including a positive active material;
a negative electrode (112) including a negative active material,
a separator (100,113, 200, 300, 400, 500) according to any one of claims 1 to 12 interposed between the positive electrode (114) and the negative electrode (112); and an electrolyte solution.

14. A method of preparing a separator (100, 113, 200, 300, 400, 500) for a rechargeable lithium battery, the method comprising:
preparing a porous substrate (110, 210, 310, 410, 510);
forming a fabric support layer (120, 220, 320, 420, 520) on at least one side of the porous substrate (110, 210, 310, 410, 510), the fabric support layer (120, 220, 320, 420, 520) comprising a plurality of connected strands of fiber, the fabric support layer (120, 220, 320, 420, 520) comprising a plurality of open portions, wherein at least some of the open portions in the fabric support layer (120, 220, 320, 420, 520) form a repeating pattern; and
forming a polymer coating layer (130, 230, 330, 430, 530) as a planarization layer on at least one side of the fabric support layer (120, 220, 320, 420,520).

15. A method according to 14, further comprising forming a ceramic layer (370, 470, 570) on at least one side of the fabric support layer (120, 220, 320, 420, 520).

## Patentansprüche

1. Separator (100, 113, 200, 300, 400, 500) für eine wiederaufladbare Lithiumbatterie, umfassend:
ein poröses Substrat (110, 210, 310, 410, 510);
eine textile Trägerschicht (120, 220, 320, 420, 520), angeordnet auf mindestens einer Seite des porösen Substrats (110, 210, 310, 410, 510), wobei die textile Trägerschicht (120, 220, 320, 420, 520) eine Mehrzahl von verbundenen Fasersträngen umfasst, und die textile Trägerschicht (120, 220, 320, 420, 520) eine Mehrzahl von offenen Bereichen umfasst, wobei zumindest einige der offenen Bereiche in der textilen Trägerschicht (120, 220, 320, 420, 520) eine sich wiederholende Struktur bilden; und
eine polymere Deckschicht (130, 230, 330, 430, 530), die eine auf mindestens einer Seite der textilen Trägerschicht (120, 220, 320, 420, 520) angeordnete Planarisierungsschicht bildet.

2. Separator nach Anspruch 1, wobei die textile Trägerschicht (120, 220, 320, 420, 520) gewebt, ungewebt oder gewirkt ist.

3. Separator nach Anspruch 1 oder 2, wobei die Struktur eine von einer netzartigen Struktur, einer Inselstruktur, einer Netzstruktur, einer Rhombenstruktur, einer Kreisstruktur, einer Fünfeckstruktur oder einer Dreieckstruktur ist.

4. Separator nach einem vorangehenden Anspruch, wobei die offenen Bereiche von 50 % bis 99 % der gesamten Fläche von einer Seite des porösen Substrats (110, 210, 310, 410, 510) ausmachen, gegebenenfalls wobei die offenen Bereiche von 70 % bis 95 % der gesamten Fläche von einer Seite des porösen Substrats (110, 210, 310, 410, 510) ausmachen.

5. Separator nach einem vorangehenden Anspruch, wobei die Faserstränge ein Polymer, ein Glas, eine Cellulose oder eine Kombination davon umfassen.

6. Separator nach einem vorangehenden Anspruch, wobei das poröse Substrat (110, 210, 310, 410, 510) ein Polyolefinharz umfasst, wobei gegebenenfalls das Polyolefinharz Polyethylen, Polypropylen, Polyvinylidenfluorid, ein Copolymer davon, oder eine Kombination davon umfasst.

7. Separator nach einem vorangehenden Anspruch, wobei die polymere Deckschicht (130, 230, 330, 430, 530) Acrylat, Urethan, Melamin, Epoxid, einen ungesättigten Ester, Resorcin, Polyamid, Vinyl, Styrol oder eine Kombination davon umfasst.

8. Separator nach einem vorangehenden Anspruch, wobei die polymere Deckschicht (130, 230, 330, 430, 530) weiterhin ein Binderpolymer umfasst, gegebenenfalls wobei das Binderpolymer in einer Menge von 10 Gew.-% bis 70 Gew.-%, bezogen auf die Gesamtmenge der polymeren Deckschicht (130, 230, 330, 430, 530), enthalten ist.

9. Separator nach einem vorangehenden Anspruch, weiterhin umfassend eine keramische Schicht (370, 470, 570), angeordnet auf mindestens einer Seite der textilen Trägerschicht (120, 220, 320, 420, 520).

10. Separator nach Anspruch 9, wobei die keramische Schicht (370, 470, 570) zumindest teilweise die offenen Bereiche der textilen Trägerschicht (120, 220, 320, 420, 520) füllt, gegebenenfalls wobei die keramische Schicht (370, 470, 570) im Wesentlichen die gleiche Dicke wie die textile Trägerschicht (120, 220, 320, 420, 520) hat.

11. Separator nach Anspruch 9 oder 10, wobei die keramische Schicht (370, 470, 570) porös ist, gegebenenfalls wobei die keramische Schicht (370, 470, 570) eine Porosität von 10 bis 50 % aufweist.

12. Separator nach einem der Ansprüche 9 bis 11, wobei die keramische Schicht (370, 470, 570) eine, ausgewählt aus der Gruppe bestehend aus Metalloxid, Metallnitrid, Metallphosphid und einer Kombination davon, umfassend eines, ausgewählt aus der Gruppe bestehend aus Al, Ti, Cr, Zr, Ca, Si und einer Kombination davon, umfasst.

13. Wiederaufladbare Lithiumbatterie (1000), umfassend:
eine positive Elektrode (114), umfassend ein Positiv-Aktivmaterial;
eine negative Elektrode (112), umfassend ein Negativ-Aktivmaterial,
einen Separator (100, 113, 200, 300, 400, 500) nach einem der Ansprüche 1 bis 12, eingefügt zwischen der positiven Elektrode (114) und der negativen Elektrode (112); und
eine Elektrolytlösung.

14. Verfahren zur Herstellung eines Separators (100, 113, 200, 300, 400, 500) für eine wiederaufladbare Lithiumbatterie, wobei das Verfahren umfasst:
Herstellen eines porösen Substrats (110, 210, 310, 410, 510);
Bilden einer textilen Trägerschicht (120, 220, 320, 420, 520) auf mindestens einer Seite des porösen Substrats (110, 210, 310, 410, 510), wobei die textile Trägerschicht (120, 220, 320, 420, 520) eine Mehrzahl von verbundenen Fasersträngen umfasst, wobei die textile Trägerschicht (120, 220, 320, 420, 520) eine Mehrzahl von offenen Bereichen umfasst, wobei zumindest einige der offenen Bereiche in der textilen Trägerschicht (120, 220, 320, 420, 520) eine sich wiederholende Struktur bilden; und
Bilden einer polymeren Deckschicht (130, 230, 330, 430, 530) als Planarisierungsschicht auf mindestens einer Seite der textilen Trägerschicht (120, 220, 320, 420, 520).

15. Verfahren nach Anspruch 14, weiterhin umfassend das Bilden einer keramischen Schicht (370, 470, 570) auf mindestens einer Seite der textilen Trägerschicht (120, 220, 320, 420, 520).

## Revendications

1. Séparateur (100, 113, 200, 300, 400, 500) pour une batterie au lithium rechargeable, comprenant :
un substrat poreux (110, 210, 310, 410, 510) ;
une couche de support en étoffe (120, 220, 320, 420, 520) disposée sur au moins un côté du substrat poreux (110, 210, 310, 410, 510), la couche de support en étoffe (120, 220, 320, 420, 520) comprenant une pluralité de brins connectés de fibre, et la couche de support en étoffe (120, 220, 320, 420, 520) comprenant une pluralité de portions ouvertes, au moins certaines des portions ouvertes dans la couche de support en étoffe (120, 220, 320, 420, 520) formant un motif répété ; et
une couche de revêtement polymère (130, 230, 330, 430, 530) formant une couche de planarisation disposée sur au moins un côté de la couche de support en étoffe (110, 210, 310, 410, 510).

2. Séparateur suivant la revendication 1, dans lequel la couche de support en étoffe (120, 220, 320, 420, 520) est tissée, non tissée ou tricotée.

3. Séparateur suivant la revendication 1 ou 2, dans lequel le motif est l'un quelconque d'un motif réticulaire, d'un motif d'ilots, d'un motif de bandes, d'un motif rhomboïdal, d'un motif circulaire, d'un motif pentagonal ou d'un motif triangulaire.

4. Séparateur suivant l'une quelconque des revendications précédentes, dans lequel les portions ouvertes forment de 50 % à 99 % de la surface totale d'un côté du substrat poreux (110, 210, 310, 410, 510), et éventuellement dans lequel les portions ouvertes forment de 70 % à 95 % de la surface totale d'un côté du substrat poreux (110, 210, 310, 410, 510).

5. Séparateur suivant l'une quelconque des revendications précédentes, dans lequel les brins de fibre comprennent un polymère, le verre, la cellulose ou une de leurs associations.

6. Séparateur suivant l'une quelconque des revendications précédentes, dans lequel le substrat poreux (110, 210, 310, 410, 510) comprend une résine polyoléfinique, où, facultativement, la résine polyoléfinique comprend le polyéthylène, le polypropylène, le poly(fluorure de vinylidène), un de leurs de leurs copolymères ou une de leurs associations.

7. Séparateur suivant l'une quelconque des revendications précédentes, dans lequel la couche de revêtement polymère (130, 230, 330, 430, 530) comprend des groupes acrylate, uréthanne, mélamine, époxy, ester insaturé, résorcinol, polyamide, vinyle, styrène ou une de leurs associations.

8. Séparateur suivant l'une quelconque des revendications précédentes, dans lequel la couche de revêtement polymère (130, 230, 330, 430, 530) comprend en outre un polymère servant de liant, éventuellement dans lequel le polymère servant de liant est incorporé en une quantité de 10 % en poids à 70 % en poids sur la base de la quantité totale de la couche de revêtement polymère (130, 230, 330, 430, 530).

9. Séparateur suivant l'une quelconque des revendications précédentes, comprenant en outre une couche de matière céramique (370, 470, 570) disposée sur au moins un côté de la couche de support en étoffe (120, 220, 320, 420, 520).

10. Séparateur suivant la revendication 9, dans lequel la couche de matière céramique (370, 470, 570) remplit au moins partiellement les portions ouvertes de la couche de support en étoffe (120, 220, 320, 420, 520), éventuellement dans lequel la couche de matière céramique (370, 470, 570) a pratiquement la même épaisseur que la couche de support en étoffe (120, 220, 320, 420, 520).

11. Séparateur suivant la revendication 9 ou 10, dans lequel la couche de matière céramique (370, 470, 570) est poreuse, éventuellement dans lequel la couche de matière céramique (370, 470, 570) a une porosité de 10 à 50 %.

12. Séparateur suivant l'une quelconque des revendications 9 à 11, dans lequel la couche de matière céramique (370, 470, 570) comprend une matière choisie dans le groupe consistant en un oxyde métallique, un nitrure métallique, un phosphure métallique et une de leurs associations, comprenant un élément choisi dans le groupe consistant en Al, Ti, Cr, Zr, Ca, Si et une de leurs associations.

13. Batterie au lithium rechargeable (1000) comprenant :
une électrode positive (114) comprenant une matière active positive ;
une électrode négative (112) comprenant une matière active négative ;
un séparateur (100, 113, 200, 300, 400, 500) suivant l'une quelconque des revendications 1 à 12, interposé entre l'électrode positive (114) et l'électrode négative (112) ; et
une solution d'électrolyte.

14. Procédé de préparation d'un séparateur (100, 113, 200, 300, 400, 500) pour une batterie au lithium rechargeable, le procédé comprenant :
la préparation d'un substrat poreux (110, 210, 310, 410, 510) ;
la formation d'une couche de support en étoffe (120, 220, 320, 420, 520) sur au moins un côté du substrat poreux (110, 210, 310, 410, 510), la couche de support en étoffe (120, 220, 320, 420, 520) comprenant une pluralité de brins connectés de fibre, la couche de support en étoffe (120, 220, 320, 420, 520) comprenant une pluralité de portions ouvertes, au moins certaines des portions ouvertes dans la couche de support en étoffe (120, 220, 320, 420, 520) formant un motif répété ; et
la formation d'une couche de revêtement polymère (130, 230, 330, 430, 530) comme couche de planarisation sur au moins un côté de la couche de support en étoffe (120, 220, 320, 420, 520).

15. Procédé suivant la revendication 14, comprenant en outre la formation d'une couche de matière céramique (370, 470, 570) sur au moins un côté de la couche de support en étoffe (120, 220, 320, 420, 520).
